Europäisches Patentamt

European Patent Office

Office européen des brevets

(11) Numéro de publication: **0 264 659**
**A1**

## (12) DEMANDE DE BREVET EUROPEEN

(21) Numéro de dépôt: **87114053.9**

(22) Date de dépôt: **25.09.87**

(51) Int. Cl.⁴: **G21F 7/02 , G02B 23/08**

(30) Priorité: **09.10.86 FR 8614065**

(43) Date de publication de la demande:
**27.04.88 Bulletin 88/17**

(84) Etats contractants désignés:
**DE GB**

(71) Demandeur: **Clave, Serge**
**9, Rue Olivier Métra**
**F-75020 Paris(FR)**

(72) Inventeur: **Clave, Serge**
**9, Rue Olivier Métra**
**F-75020 Paris(FR)**

(74) Mandataire: **Casalonga, Axel**
**BUREAU D.A. CASALONGA - JOSSE**
**Morassistrasse 8**
**D-8000 Munich 5(DE)**

(54) **Fenêtre d'observation à travers une paroi, notamment d'une enceinte radio-active.**

(57) Fenêtre d'observation comprenant une succession de dalles de verre (D11, D12, D13) parallélépipédiques, les dalles successives ayant, des dimensions décroîssantes dans le sens d'observation, et la dalle (D13) la plus petite étant flanquée latéralement de prismes (P15) à double réflexion faisant saillie au moins partiellement dans l'enceinte.

FIG.2

# FENETRE D'OBSERVATION A TRAVERS UNE PAROI, NOTAMMENT D'UNE ENCEINTE RADIO-ACTIVE.

La présente invention se rapporte à une fenêtre carrée ou rectangulaire pour l'observation à travers une paroi, notamment d'une enceinte radioactive, comprenant, dans le sens d'observation, une succession de dalles de verre parallélépipédiques montées dans une ouverture de la paroi, les dalles successives ayant des dimensions différentes.

Sur les fenêtres connues de ce type, les dalles de dimensions différentes se succèdent de manière que la dalle la plus petite se trouve du côté de l'observateur et la dalle la plus grande du côté de l'enceinte, cela afin d'obtenir un champ de vision le plus grand possible.

Néanmoins, même dans les meilleurs cas, le champ de vision total est généralement limité à environ 140°, c'est-à-dire qu'il existe de chaque côté de la fenêtre sur angle mort de l'ordre de 20°.

Dans le cas d'enceintes de grandes dimensions, cela entraîne des zones importantes inutilisables car inaccessibles à l'observation.

D'autres part, les objets vus sous des angles très inclinés sont entachés de distorsions par rapport aux objets observés perpendiculairement à la fenêtre. Cette déformation des objets provient de la différence des épaisseurs de verre traversées par le chemin optique, épaisseur qui est minimale pour une observation perpendiculaire à la fenêtre, et maximale pour une observation en vision inclinée. Ce défaut est gênant pour l'appréciation des objets les uns par rapport aux autres.

La présente invention a pour objet une fenêtre d'observation, notamment pour des enceintes radio-actives, qui, tout en étant de structure simple, remédie aux deux inconvénients précités des fenêtres d'observation connues, c'est-à-dire qui procure un champ d'observation total de 180° et qui supprime ou pour le moins atténue considérablement l'effet de distorsion entre une observation perpendiculaire à la fenêtre et une observation en vision inclinée.

Selon l'invention, la fenêtre comprend au moins deux dalles successives ayant des dimensions décroissantes dans le sens d'observation, la dalle la plus petite étant flanquée latéralement de prismes à double réflexion ayant en coupe la forme d'un triangle rectangle présentant deux angles de 30° et 60° respectivement, les prismes ayant leur face correspondant au grand côté du triangle tournée vers les faces latérales de la dalle la plus petites et leur face correspondant au petit côté du triangle appliquée contre la face de la dalle suivante, orientée vers l'enceinte, les prismes faisant saillie au moins partiellement dans l'enceinte.

Sur la fenêtre conforme à l'invention, les dalles de dimensions différentes sont donc disposées en sens inverse par rapport aux fenêtre classiques, ce qui donne certes un champ central réduit en vision directe à travers les dalles, mais complété par des champs latéraux en vision à travers les prismes de manière à obtenir un champ de vision total de 180°. Les prismes transmettent une imagerie non inversée du fait de la double réflexion des rayons lumineux. D'autre part, le chemin optique parcouru à travers les prismes et la ou les dalles situées entre les prismes et l'observateur est égal au chemin optique parcouru perpendiculairement à travers l'ensemble des dalles, ce qui fait que l'effet de distorsion est notablement atténué pour les observations latérales.

Afin de maintenir la double réflexion dans les prismes latéraux lorsqu'un observateur se déplace devant la fenêtre, il est avantageux que des écrans opaques soient disposés entre les prismes et la dalle flanquée par les prismes. Ces écrans délimitent le champ de vision à travers l'ensemble des dalles par rapport aux champs de vision à travers les prismes.

De préférence, la fenêtre comprend au moins trois dalles successives et lesdits écrans sont prolongés à travers la dalle qui suit la dalle flanquée par les prismes.

La dalle la plus petite peut faire saillie dans l'enceinte, et présenter dans ce cas une épaisseur sensiblement égale à la hauteur des prismes.

Si la fenêtre doit permettre l'observation non seulement vers les deux côtés, mais également vers le haut et vers le bas, la dalle la plus petite peut être flanquée de prismes à double réflexion sur ses quatre faces latérales.

Le même résultat peut cependant être obtenu également par le fait que la dalle la plus petite est flanquée de prismes à double réflexion sur deux faces latérales opposées seulement et que la fenêtre dans son ensemble est montée pivotante autour d'un axe perpendiculaire à la paroi.

Dans le cas d'une enceinte radio-active, il est alors avantageux, afin de maintenir l'étanchéité de l'enceinte, que la fenêtre soit montée pivotante dans un fourreau fixe fermé à l'extrémité côté enceinte par un hublot hémisphérique.

Afin d'éviter que la fenêtre fasse en permanence saillie à l'intérieur de l'enceinte, il est possible de donner à la dalle la plus petite une épaisseur telle qu'elle ne fait pas saillie vers l'intérieur de l'enceinte, c'est-à-dire une épaisseur inférieure au grand côté des prismes, et de monter chaque prisme pivotant autour d'un axe situé près de l'angle de 60°. Il est ainsi possible d'amener les prismes de la position d'observation latérale dans laquelle ils font saillie partiellement dans l'enceinte, par pivotement en position escamotée, position dans laquelle ils ne font pas saillie à l'intérieur de l'enceinte.

En se référant aux dessins schématiques annexés, on va décrire ci-après plus en détail plusieurs modes de réalisation illustratifs et non limitatifs de l'objet de l'invention;

la figure 1 est une coupe schématique d'une fenêtre suivant l'état de la technique;

la figure 2 est une coupe schématique d'une fenêtre conforme à l'invention;

la figure 3 est une coupe schématique d'une fenêtre conforme à l'invention montée pivotante;

la figure 4 est une coupe schématique d'une fenêtre conforme à l'invention à prismes escamotables.

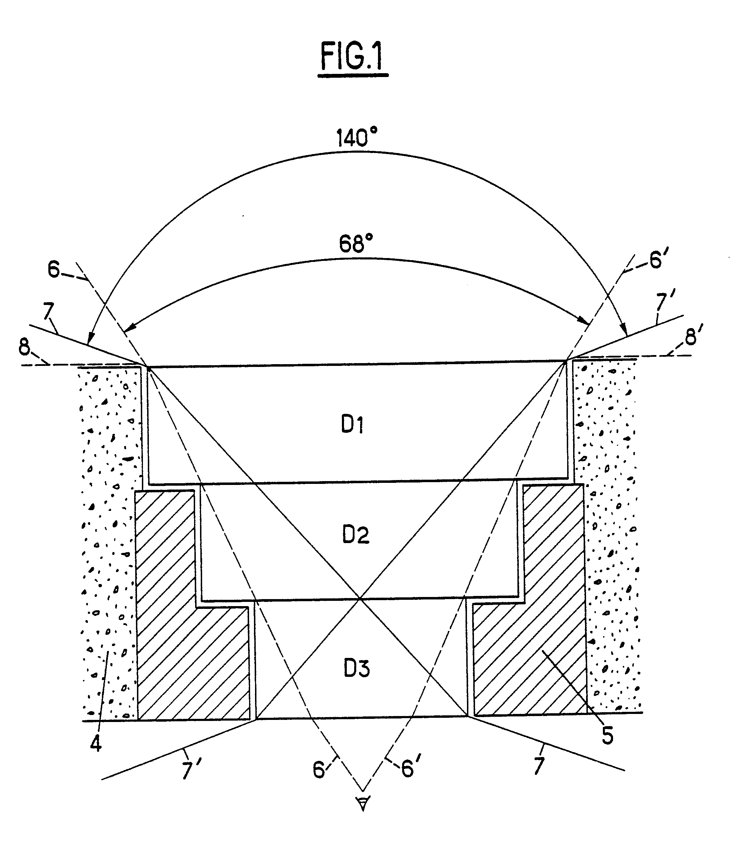

La fenêtre de type connu pour des enceintes radio-actives, illustrée par la figure 1, est formée de trois dalles de verre D1, D2 et D3 parallélépipédiques de même épaisseur, mais de dimensions différentes, montée dans une paroi 4 en béton d'une enceinte radio-active. Pour que la fenêtre assure la même protection aux rayonnements ionisants que la paroi 4, les trois dalles D1, D2 et D3 dont l'épaisseur totale est égale à l'épaisseur de la paroi 4 présentent la même densité que le béton de la paroi 4. La dalle D1 de plus grandes dimensions est disposée du côté de l'enceinte (côté chaud) et la dalle D3 de plus petites dimensions est disposée du côté externe (côté froid) sur lequel le trouve l'observateur. Cette disposition a pour but d'obtenir un grand champ de vision. Les blocs A en matériau de densité 3,5 permettant de monter et de démonter la fenêtre du côté froid.

On va donner ci-après un exemple chiffré pour une telle fenêtre connue.

Une fenêtre implantée dans une paroi 4 en béton d'une épaisseur de 1200 mm, de densité 3,5, est formée de trois dalles de verre d'une épaisseur totale de 1200 mm, le verre ayant une densité de 3,5 et un indice de réfraction de 1,6. La dalle D1 présente des dimensions de 1200 x 1200 mm et la dalle D3 des dimensions de 700 x 700 mm.

Dans ce cas, la fenêtre procure à un observateur situé côté froid, à environ 250 mm de la fenêtre au centre de la fenêtre, un champ instantané, limité par les chemins optiques 6 et 6', de l'ordre de 68°.

Pour un observateur se déplaçant de droite à gauche ou de haut en bas, le champ de vision total, limité par les chemins optiques 7 et 7', est d'environ 140°. Au-delà ce cette limite, l'observateur ne peut intercepter les images provenant des zones comprises entre la face interne de la paroi, c'est-à-dire les chemins optiques 8 et 8' et les chemins optiques 7 et 7'.

En plus de ces zones inaccessibles à l'observation, la fenêtre présente l'inconvénient que les objets vus sous un angle très incliné sont entachés de distorsion par rapport aux objets observés perpenculairement à la fenêtre, en raison de la différence des épaisseurs de verre traversées par les chemins optiques, épaisseur qui est minimum pour une observation perpendiculaire à la fenêtre et maximale pour une observation en vision inclinée.

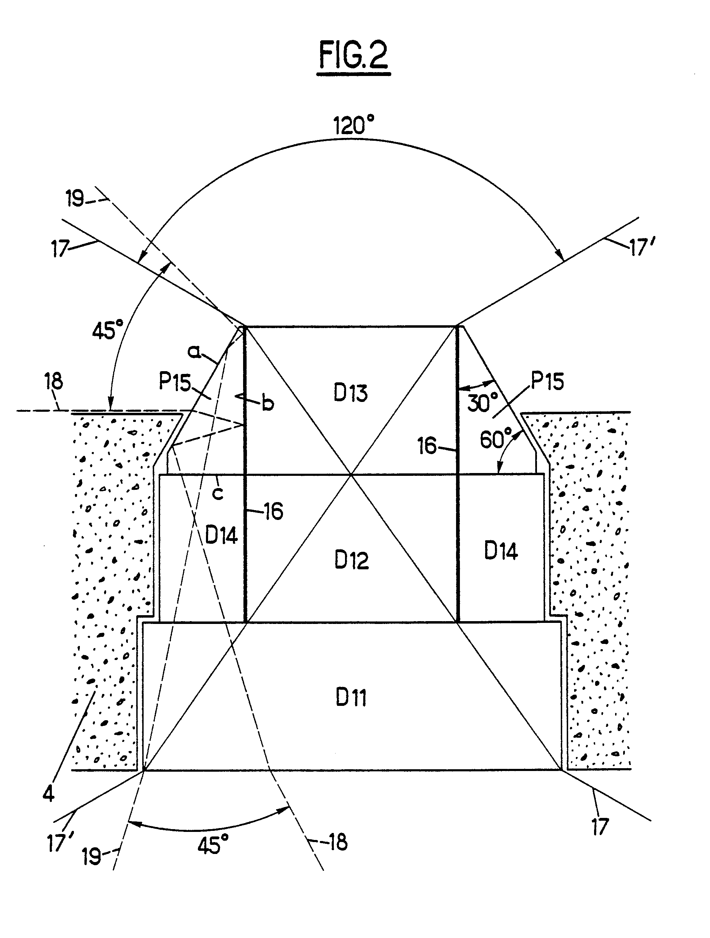

La fenêtre conforme à l'invention illustrée par la figure 2 comprend trois dalles de verre D11, D12 et D13 parallélépipédiques, ayant ensemble une épaisseur supérieure à l'épaisseur de la paroi 4 dans laquelle la fenêtre est implantée. La dalle D11 la plus grande est disposée du côté froid et la dalle D13 de plus petites dimensions du côté chaud, de manière à dépasser la face interne de la paroi 4 sur une partie de son épaisseur. La dalle D12 intermédiaire a les mêmes dimensions que la dalle D13. La dalle D12 est flanquée sur chaque côté d'une dalle latérale D14 et la dalle D13 est flanquée sur chaque côté, sur toute son épaisseur, d'un prisme P15 à double réflexion. Des écrans opaques 16 sont disposés entre la dalle D13 et les prismes P15, ainsi qu'entre la dalle D12 et les dalles latérales D14.

Chaque prisme P15 présente, en coupe, la forme d'un triangle rectangle ayant deux angles aigus respectivement de 30° et de 60°. Chaque prisme P15 est disposé de manière que la face $\underline{b}$ correspondant au grand côté du triangle soit tournée vers une face latérale de la dalle D13 et que la face $\underline{c}$ correspondant au petit côté du triangle soit appliquée contre la face d'une dalle 14, tournée vers l'intérieur de l'enceinte.

La face $\underline{b}$ de chaque prisme P15 est métallisé pour assurer la réflexion des rayons lumineaux pénétrant par la face $\underline{a}$ correspondant à l'hypothénuse du triangle, ces rayons subissant ensuite une deuxième réflexion totale sur la face $\underline{a}$ pour ressortir par la face $\underline{c}$.

Le prisme P15 transmet une imagerie non inversée du fait que la double réflexion des rayons lumineux. D'autre part, le chemin optique parcouru entre les face $\underline{a}$ -$\underline{b}$ -$\underline{c}$ est égal à la hauteur de la face $\underline{b}$ du prisme, donc à l'épaisseur de la dalle D13.

Dans ces conditions, le chemin optique parcouru à travers un prisme P15, une dalle D14 et la dalle D11 est égal au chemin optique parcouru perpendiculairement à la paroi 4 à travers les trois dalles D13, D12, D11, et l'effet de distorsion se trouve ainsi notablement atténué pour les observations latérales qui s'effectuent à travers les prismes P15.

En ce qui concerne les champs observables, et en choisissant, pour les dalles D11 et D13, les mêmes dimensions et le même indice de réfraction que pour les dalles D3 et D1 de l'exemple de la figure 1, et une épaisseur totale de la fenêtre de 1500 mm, on note qu'un observateur se déplaçant latéralement peut intercepter un champ d'environ 120° limité par les chemins optiques 17, 17' pour l'observation centrale.

Pour l'observation latérale, la fenêtre pénétrant de 300 mm à l'intérieur de l'enceinte, ce qui donne une ouverture de la face d'entrée des prisme P15 de 350 mm, permettant d'observer un champ total de 45° pour un observateur se déplaçant latéralement. Les chemins optiques latéraux très inclinés, inobservables dans l'exemple de la figure 1, sont renvoyés sous des angles de 15° et 30° sur la fenêtre côté froid, et sont facilement observables.

Les champs d'observation latéraux délimités par les chemins optiques 18 et 19, qui couvrent chacun 45°, se recoupent de 15° avec le champ total de la partie centrale limité par les chemins optiques 17, 17', couvrant 120° comme déjà mentionné. De ce fait, il n'y a pas discontinuité d'observation pour un objet se déplaçant devant la fenêtre.

Dans cet exemple, le champ instantané pour la partie centrale est ramené à environ 34° et le champ instantané pour la vision latérale est de 17° pour un observateur placé à environ 250 mm de la face de la fenêtre côté froid.

Il y a de noter que si l'on diminue la profondeur sur laquelle la fenêtre dépasse à l'intérieur de l'enceinte, les champs totaux des parties latérales, délimités par les chemins optiques 18 et 19, ne diminuent pas, seul le champ instantané varie du fait de la diminution de l'ouverture des prismes P15. Toutefois, cette diminution de champ est atténuée, l'épaisseur de la fenêtre allant en diminuant au fur et à mesure que l'on réduit la profondeur de dépassement.

Les écrans opaques 16 ont pour fonction de maintenir la double réflexion sur les prismes P15 lorsqu'un observateur se déplace devant la fenêtre.

Ces écrans qui délimitent le champ de vision totale de la partie centrale des champs de vision des parties latérales peuvent être réalisés au moment de l'assemblage de la fenêtre et être constitués par des colles opaques servant à l'assemblage de la fenêtre.

Au lieu de munir la fenêtre conforme à l'invention de quatre prismes P15 flanquant la dalle D13 la plus petite sur les quatres côtés, il est également possible de ne prévoir que deux prismes P15 opposés, par exemple pour permettre l'observation gauche et droite ou haute et basse.

Toutefois, il est également possible, avec deux prismes opposés P15 seulement, de permettre une observation à la fois gauche/droite et haute/basse.

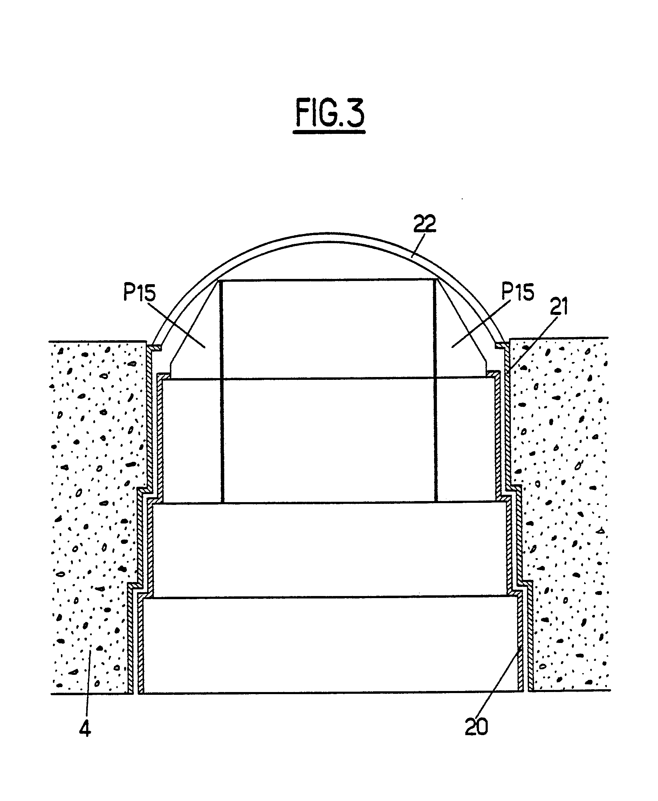

A cet effet, comme illustré par la figure 3, la fenêtre dans son ensemble est conçue de manière à pouvoir pivoter autour d'un axe X-X perpendiculaire à la paroi 4, sous l'action d'un moyen manuel ou mécanique quelconque.

Afin de maintenir l'étanchéité de l'enceinte, la fenêtre est fixée dans une monture 20 montée pivotante à l'intérieur d'un fourreau 21 implanté dans la paroi 4. Le fourreau 21 est fermé, à son extrémité côté chaud, par un hublot hémisphérique 22 en verre stabilisé.

La fenêtre suivant la figure 3 diffère par ailleurs de la fenêtre suivant la figure 2 également par le fait qu'elle comprend quatre dalles successives au lieu de trois, les quatre dalles n'ayant pas toutes la même épaisseur.

Le choix du nombre des dalles et des épaisseurs de dalles conditionne les champs de vision de la partie centrale et des parties latérales.

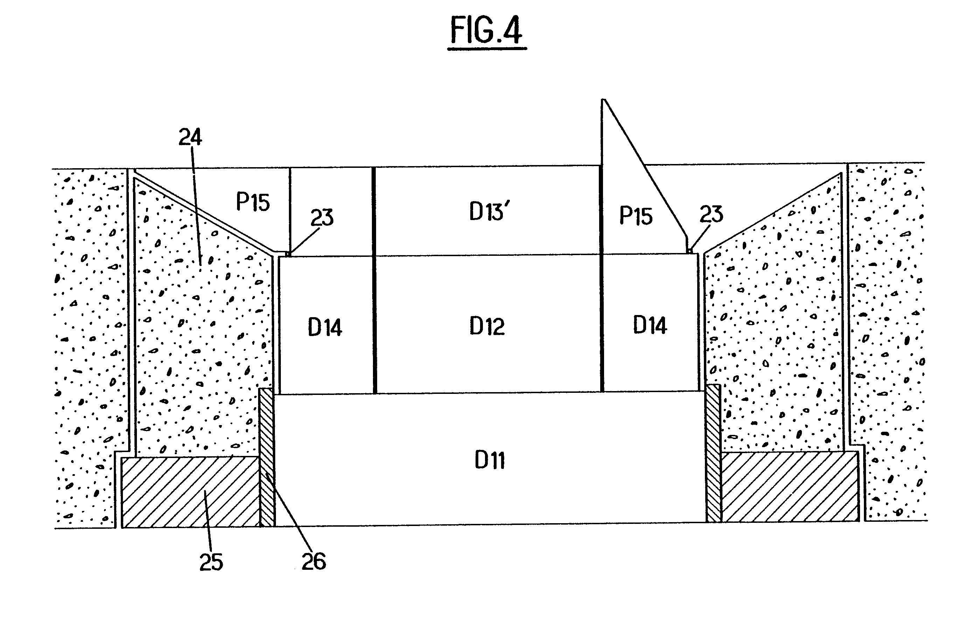

La figure 4 illustre un mode de réalisation d'une fenêtre conforme à l'invention, dans lequel la dalle D13' la plus petite ne fait pas saillie à l'intérieur de l'enceinte. Cette dalle D13' d'épaisseur réduite est ici flanquée de prismes P15 montés pivotants, par des moyens manuels ou mécaniques quelconques, autour d'axes 23 situés sensiblement à l'angle de 60° des prismes. L'épaisseur de la dalle D13' correspond à la longueur du petit côté des prismes P15. Ce montage pivotant permet de faire passer les prismes P15 de la position redressée illustrée sur la moitié de droite de la figure à la position escamotée illustrée sur la moitié de gauche de la figure. En position redressée, dans laquelle les prismes P15 permettent l'observation latérale de la même manière que dans l'exemple de la figure 2, les prismes P15 font saillie vers l'intérieur de l'enceinte sur une partie de leur hauteur. En position escamotée, la fenêtre permettant uniquement l'observation centrale ne présente plus aucune saillie à l'intérieur de l'enceinte.

Dans ce mode de réalisation, il est nécessaire de prévoir, pour les dalles D11 et D14, des verres de densité supérieure aux dalles D12 et D13' afin que les dalles D14 et D11, en position escamotée des prismes P15, offrent une protection suffisante contre les rayonnements.

Il convient encore de remarquer que dans l'exemple de la figure 4, les blocs 24, 25 et 26 sont constitués par des bouchons en des matériaux de densité appropriée permettant d'extraire la fenêtre vers le côté froid avec les prismes P15 soit redressés soit escamotés, en retirant l'un ou l'autre des bouchons 24, 25, 26.

Bien que la fenêtre conforme à l'invention ait été décrite ci-dessus dans son application préférée à l'observation dans des enceintes radio-actives, il va de soi qu'elle peut trouver également d'autres applications.

## Revendications

1. Fenêtre carrée ou rectangulaire pour l'observation à travers une paroi, notamment d'une enceinte radio-active, comprenant, dans le sens d'observation, une succession de dalles de verre parallélépipédiques montées dans une ouverture de la paroi, les dalles successives ayant des dimensions différentes, caractérisée par le fait que la fenêtre comprend au moins deux dalles successives (D11, D12, D13) ayant des dimensions décroîssantes dans le sens d'observation, la dalle (D13) la plus petite étant flanquée latéralement de prismes (P15) à double reflexion ayant en coupe la forme d'un triangle rectangle présentant deux angles de 30° et 60° respectivement, les prismes ayant leur face (b) correspondant au grand côté du triangle tournée vers les faces latérales de la dale (D13) la plus petite et leur face (c) correspondant au petit côté du triangle appliquée contre la face de la dale suivante (D12), orientée vers l'enceinte, les prismes faisant saillie au moins partiellement dans l'enceinte.

2. Fenêtre suivant la revendication 1, caractérisée par le fait que des écrans opaques (16) sont disposés entre les prismes (P15) et la dalle (D13) flanquée par les prismes.

3. Fenêtre suivant la revendication 2, caractérisée par le fait que la fenêtre comprend au moins trois dalles successives (D11, D12, D13) et lesdits écrans (16) sont prolongés à travers la dalle (D12) qui suit la dalle (D13) flanquée par les prismes.

4. Fenêtre suivant l'une quelconque des revendications précédentes, caractérisée par le fait que la dalle (D13) la plus petite fait saillie dans l'enceinte et présente une épaisseur sensiblement égale à la hauteur des prismes.

5. Fenêtre suivant l'une quelconque des revendications précédentes, caractérisée par le fait que la dalle (D13) la plus petite est flanquée de prismes (P15) à double reflexion sur ses quatre faces latérales.

6. Fenêtre suivant l'une quelconque des revendications 1 à 4, caractérisée par le fait que la dalle (D13) la plus petite est flanquée de prismes (P15) à double reflexion sur deux faces latérales opposées et que la fenêtre dans son ensemble est montée pivotante autour d'un axe (X-X) perpendiculaire à la paroi.

7. Fenêtre suivant la revendication 6, caractérisée par le fait que la fenêtre est montée pivotante dans un fourreau (21) fixe fermé à l'extrémité côté enceinte par un hublot hémisphérique (22).

8. Fenêtre suivant l'une quelconque des revendications 1, 2, 3, 5, 6, caractérisée par le fait que la dalle (D13') la plus petite présente une épaisseur inférieure au grand côté (b) des prismes (P15) de manière à ne pas faire saillie vers l'intérieur de l'enceinte, et chaque prisme (P15) est monté pivotant autour d'un axe (23) situé près de l'angle de 60°.

## FIG.1

## FIG.2

# FIG.3

# FIG.4

24

P15

23

D13'

P15

23

D14

D12

D14

24

D11

25

26

0 264 659

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | LU-A- 39 093 (C.E.A.)<br>* Figure 1 *<br>--- | 1 | G 21 F 7/02<br>G 02 B 23/08 |
| A | DE-A-3 447 894 (OLYMPUS OPTICAL CO.)<br>* Résumé; figures *<br>--- | 1 | |
| A | PROCEEDINGS OF THE 31st CONFERENCE ON REMOTE SYSTEMS TECHNOLOGY, vol. 2, 1983, pages 70-74, La Grange Park, Illinois, US; J.P. FLECK et al.: "Radiation shielding window technology in France"<br>* Page 70, colonne de droite; figures *<br>--- | 1 | |
| A | PROCEEDINGS OF THE 31st CONFERENCE ON REMOTE SYSTEMS TECHNOLOGY, vol. 2, 1983, pages 53-61, La Grange Park, Illinois, US; G.F. BOGAR: "Cost effective design of radiation shielding windows"<br>* Figures; page 59, dernier paragraphe - page 60; figure 4b *<br>----- | 1,4 | |

**DOMAINES TECHNIQUES RECHERCHES (Int. Cl.4)**

G 21 F 7/00
G 02 B 5/00
G 02 B 17/00
G 02 B 23/00
E 06 B 7/00

Le présent rapport a été établi pour toutes les revendications

| Lieu de la recherche | Date d'achèvement de la recherche | Examinateur |
|---|---|---|
| LA HAYE | 12-01-1988 | LAMINGER N.W. |